# FASCICULE DE BREVET EUROPEEN

(11) **EP 3 635 756 B1**
(45) Date de publication et mention de la délivrance du brevet: **28.04.2021**
(21) Numéro de dépôt: 18732839.8
(22) Date de dépôt: 31.05.2018
(51) Int. Cl.: H01B 13/24, H01B 13/28, H01B 7/295, C08G 77/30

(54) **CÂBLE RÉSISTANT AU FEU**
FEUERFESTES KABEL
FIRE-RESISTANT CABLE

(30) Priorité: 02.06.2017 FR 1754919
(43) Date de publication de la demande: 15.04.2020
(73) Titulaire: Nexans, 92400 Courbevoie (FR)
(72) Inventeur: BAHLOUL, Walid, 69100 Villeurbanne (FR); TOURE, Birane, 69100 Villeurbanne (FR)
(74) Mandataire: Ipsilon
(86) Numéro de dépôt international: PCT/FR2018/051254
(87) Numéro de publication internationale: WO 2018/220330

(56) Documents cités:
- WO-A1-2016/046479
- JP-A- 2003 171 467
- US-A1- 2013 248 783
- US-A1- 2017 002 199

## Description

L'invention concerne un câble résistant au feu comprenant une couche électriquement isolante comprenant une matrice polymère organique dans laquelle est dispersée une charge ignifugeante comprenant un réseau macromoléculaire d'oxyde de silicium fonctionnalisé par des fonctions phosphonate, la couche électriquement isolante étant obtenue à partir d'une composition comprenant au moins un polymère organique thermoplastique et au moins un précurseur de ladite charge ignifugeante comprenant du silicium et du phosphore ; ainsi qu'un procédé de préparation dudit câble.

Elle s'applique typiquement mais non exclusivement aux câbles électriques et/ou optiques destinés au transport d'énergie et/ou à la transmission de données, en particulier aux câbles électriques et/ou optiques de sécurité résistants au feu, notamment sans halogène, susceptibles de fonctionner pendant un laps de temps donné dans des conditions d'incendie, sans être pour autant propagateur d'incendie ni générateur de fumées importantes. Ces câbles de sécurité sont en particulier des câbles de transport d'énergie basse tension (notamment inférieure à 6kV), moyenne tension (notamment de 6 à 45-60 kV) ou des câbles de transmission basse fréquence, tels que des câbles de contrôle ou de signalisation.

Un câble d'énergie et/ou de télécommunication est un câble destiné au transport de l'énergie électrique et/ou à la transmission de données. Il comprend généralement un ou plusieurs éléments conducteurs isolés, ou en d'autres termes un ou plusieurs conducteur(s) (électrique(s) et/ou optique(s)) allongé(s) entouré(s) par au moins une couche électriquement isolante. La couche électriquement isolante peut être typiquement une couche polymère électriquement isolante en contact physique avec le ou les conducteur(s) électrique(s) et/ou optique(s). Ledit ou lesdits éléments conducteurs isolés sont entourés par une gaine extérieure de protection destinée à protéger mécaniquement le ou les éléments conducteurs isolés. Dans certaines constructions de câbles, il n'y a qu'une seule couche qui assure les deux fonctions d'isolant électrique et de gaine de protection.

Les matériaux généralement utilisés pour former la couche électriquement isolante et/ou ladite gaine de protection sont des matériaux composites à base de polymères, par exemple de polymères siliconés, et de divers additifs, notamment des charges de renfort telles que de la silice, et/ou des charges ignifugeantes (ou retardateurs de flamme) destinées à améliorer leur résistance au feu.

Dans le domaine des câbles, il existe de nombreuses méthodes pour améliorer le comportement au feu des polymères employés comme matériaux d'isolation et/ou de gainage.

La solution la plus répandue jusqu'à maintenant a consisté à employer des composés halogénés, sous forme d'un sous-produit halogéné dispersé dans une matrice polymère, ou directement sous forme d'un polymère halogéné comme dans le cas d'un polychlorure de vinyle (PVC). Cependant, les réglementations actuelles tendent désormais à interdire l'utilisation de ce type de substances en raison essentiellement de leur toxicité et de leur corrosivité potentielles, que ce soit au moment de la fabrication du matériau ou lors de sa décomposition par le feu. Quoi qu'il en soit, le recyclage des composés halogénés demeure toujours particulièrement problématique.

C'est pourquoi on a de plus en plus recours à des charges ignifugeantes non halogénées, et notamment aux hydroxydes métalliques tels que l'hydroxyde d'aluminium ou l'hydroxyde de magnésium. Ce type de solutions techniques présente toutefois l'inconvénient de nécessiter de grandes quantités de charges pour atteindre un niveau d'efficacité satisfaisant, que ce soit en termes de capacité à retarder la propagation des flammes, que de résistance au feu. À titre d'exemple, la teneur en hydroxydes métalliques peut atteindre typiquement 150 à 250% en masse, par rapport à la masse totale de matériau polymère. Or toute incorporation massive de charges induit une augmentation considérable de la viscosité de la matière, et par conséquent une diminution notable de la vitesse d'extrusion, d'où une baisse de productivité importante. L'addition de trop grandes quantités d'additifs retardateurs de feu est également à l'origine d'une détérioration significative des propriétés mécaniques et électriques du câble.

Par ailleurs, le brevet US 5,286,775 a décrit un matériau électriquement isolant extrudé ou moulé obtenu à partir d'une composition sans halogène comprenant 100 parties en poids d'une polyoléfine greffée avec 1 à 10 parties en poids d'anhydride maléique, 0,1 à 10 parties en poids d'un initiateur de radicaux libres, 0,5 à 10 parties en poids d'un antioxydant et 5 à 500 parties en poids d'une charge ignifugeante comprenant du polyphosphate d'ammonium (e.g. de l'ordre de 130 parties en poids). Un tel matériau peut être obtenu par mélange d'une polyoléfine greffée avec de l'anhydride maléique à l'état fondu avec une charge ignifugeante comprenant du polyphosphate d'ammonium ; puis extrusion ou moulage du mélange. La polyoléfine greffée peut être préalablement obtenue par extrusion réactive d'un mélange comprenant la polyoléfine, l'anhydride maléique, un peroxyde et un antioxydant. L'extrusion réactive permet le greffage de l'anhydride maléique sur la polyoléfine et ainsi la modification chimique de la polyoléfine *in situ.* Cependant, la dispersion de la charge ignifugeante inorganique au sein de la matrice polymère organique à l'état fondu que constitue la polyoléfine greffée n'est pas homogène Le document US 2013/248783 décrit un agent retardateur de flamme à base de silicium et de phosphore pouvant être utilisé dans une couche isolante de câble. Ce document décrit plus particulièrement un agent retardateur de flamme polymère à base de silicium, phosphore et azote, obtenu par réaction d'un silanediyldiamine et d'un dihalophosphate.

Le document US 2017/002199 décrit une composition ignifugeante pour enveloppes pour câbles comprenant un polyuréthane thermoplastique, au moins un polymère choisi parmi les copolymères d'éthylène-acétate de vinyle, le polyéthylène, le polypropylène, les copolymères d'éthylène-propylène et les copolymères à base de styrène, au moins un hydroxyde de métal et au moins un agent retardateur de flamme contenant du phosphore. L'agent retardateur de flamme contenant du phosphore peut être un dérivé d'un acide phosphorique, d'un acide phosphonique ou phosphinique tel qu'un sel avec un cation organique ou inorganique, ou un ester organique.

Par ailleurs, les solutions de l'art antérieur et/ou celles décrites ci-dessus ne sont pas adaptées, notamment en termes de flexibilité, d'adhérence et de protection thermique, pour pouvoir servir de couche électriquement isolante et résistante au feu dans un câble électrique et/ou de transmission de données, notamment lors d'un incendie. De plus, elles ne sont pas forcément compatibles avec la conservation des bonnes propriétés mécaniques et diélectriques des autres constituants d'un câble d'énergie et/ou de transmission de données (élément conducteur électrique et/ou optique, autres couches électriquement isolantes, écrans, etc...).

Le but de la présente invention est de pallier les inconvénients des techniques de l'art antérieur en proposant un câble d'énergie et/ou de télécommunication présentant une bonne résistance au feu, tout en garantissant de bonnes propriétés mécaniques, notamment en termes de flexibilité, et un coût de revient avantageux.

Un autre but de l'invention est de fournir un procédé de fabrication d'un câble résistant au feu simple, économique, facile à mettre en œuvre, et permettant de conduire à un câble qui évite la propagation de la flamme, résiste au feu afin de fonctionner le plus longtemps possible, et limite sa dégradation dans des conditions thermiques extrêmes telles qu'un incendie, tout en garantissant de bonnes propriétés mécaniques, notamment en termes de flexibilité.

La présente invention a pour premier objet un câble d'énergie et/ou de télécommunication comprenant au moins un élément conducteur allongé et au moins une couche électriquement isolante entourant ledit élément conducteur allongé, caractérisé en ce que :
- la couche électriquement isolante comprend une matrice polymère organique dans laquelle est dispersée une charge ignifugeante comprenant un réseau macromoléculaire d'oxyde de silicium fonctionnalisé par des fonctions phosphonate, et
- la couche électriquement isolante est obtenue à partir d'une composition comprenant au moins un polymère organique thermoplastique et au moins un précurseur de ladite charge ignifugeante comprenant du silicium et du phosphore.

Dans la présente invention, la composition est apte à former la couche électriquement isolante. En particulier, le précurseur de la charge ignifugeante peut subir une hydrolyse-condensation, bien connue sous l'appellation « procédé sol-gel » pour former la charge ignifugeante.

Ainsi, grâce à la formation de la charge ignifugeante directement au sein de la matrice polymère organique à partir du précurseur (formation *in situ*)*,* la charge ignifugeante est uniformément dispersée au sein de la matrice polymère organique. Par ailleurs, grâce à la présence de la charge ignifugeante, il n'est pas nécessaire d'utiliser d'autres charges ignifugeantes conventionnelles (e.g. hydroxydes ou oxydes métalliques). On obtient ainsi un câble d'énergie et/ou de télécommunication présentant une bonne résistance au feu, tout en garantissant de bonnes propriétés mécaniques, notamment en termes de flexibilité, et un coût de revient avantageux.

Les fonctions phosphonate peuvent être des fonctions monoester d'acide phosphonique [-PO(OR)(OH)], des fonctions diester d'acide phosphonique [-PO(OR)₂], des fonctions acide phosphonique [-PO(OH)₂] ou un de leurs mélanges, R représentant un groupe alkyle comprenant de 1 à 12 atomes de carbone, et de préférence représentant un groupe méthyle, éthyle, propyle ou isopropyle.

Le réseau macromoléculaire d'oxyde de silicium de la charge ignifugeante peut être fonctionnalisé par les fonctions phosphonate *via* un bras de liaison L.

La nature du bras de liaison L n'est pas critique. Le bras de liaison L peut être une chaîne hydrocarbonée, en particulier alkylène linéaire ou ramifiée, ladite chaîne hydrocarbonée ayant de 1 à 12 atomes de carbone, préférentiellement de 1 à 10 atomes de carbone, et encore plus préférentiellement de 1 à 5 atomes de carbone.

Selon une forme de réalisation préférée de l'invention, la charge ignifugeante est un polymère d'oxyde de silicium portant des groupements organiques R¹ répondant à la formule -(CH₂)ₙ-R² dans laquelle 0 ≤ n ≤ 5, et R² représente :
- un groupe monoester d'acide phosphonique [-PO(OR)(OH)],
- un groupe diester d'acide phosphonique [-PO(OR)₂],
- un groupe acide phosphonique [-PO(OH)₂], ou
- un de leurs mélanges,

R étant tel que défini dans l'invention.

Ainsi, selon cette forme de réalisation, le groupe -(CH₂)ₙ- dans lequel 0 ≤ n ≤ 5 correspond au bras de liaison L.

Selon un mode de réalisation de l'invention, la charge ignifugeante est un silsesquioxane polyhédrique oligomérique (bien connu sous l'anglicisme POSS pour Polyhedral Oligomeric Silsesquioxane).

Un POSS est classiquement une cage inorganique silicium-oxygène avec une structure du type SiO_{3/2} et des substituants organiques R¹ tels que définis dans l'invention liés de façon covalente aux atomes de silicium de la cage.

La formule générale d'un POSS est du type R¹ₚTₚ, dans laquelle T = SiO_{3/2}, p étant un entier. De préférence, p est un entier pair pouvant être égal à 8, 6, 10, 12, 14 ou 16.

La structure suivante illustre la formule générale d'un POSS avec p = 8 :

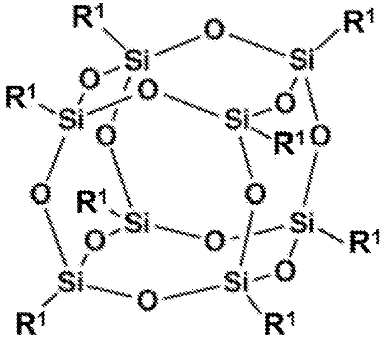

Les groupes Si-O groups fournissent les propriétés inorganiques et les groupes R¹ les propriétés organiques.

La charge ignifugeante est de préférence sous la forme de particules, notamment dispersées de façon homogène au sein de la matrice polymère organique.

Les particules de charge ignifugeante ont généralement une taille moyenne comprise entre 0,1 et 5 µm environ.

La matrice polymère organique peut comprendre un élastomère, un polymère organique thermoplastique ou un de leurs mélanges.

Selon l'invention, la charge ignifugeante telle que définie dans l'invention représente de préférence de 1 à 15% en masse environ, et encore plus préférentiellement de 1 à 9% en masse environ, par rapport à la masse totale de la couche électriquement isolante. Le taux de charge ignifugeante dans la couche peut être aisément contrôlé par le taux de précurseur utilisé dans la composition.

Selon l'invention, la matrice polymère organique représente de préférence de 70 à 99% en masse environ, et encore plus préférentiellement de 90 à 99% en masse environ, par rapport à la masse totale de la couche électriquement isolante.

Le précurseur de ladite charge ignifugeante comprend du silicium et du phosphore. Il peut être un organoalcoxysilane fonctionnalisé par au moins une fonction phosphonate telle que définie dans l'invention, notamment une fonction diester d'acide phosphonique [-PO(OR)₂] telle que définie ci-dessus.

Le précurseur de ladite charge ignifugeante peut être un organotrialkoxysilane fonctionnalisé par une fonction phosphonate, notamment *via* un bras de liaison tel que défini dans l'invention, et en particulier répondant à la formule suivante :

(R'O)₃Si-(CH₂)ₙ-R²

dans laquelle n et R² sont tels que définis dans l'invention, et de préférence R² est un groupe diester d'acide phosphonique [-PO(OR)₂], R étant tel que défini dans l'invention, et
R' est un groupe alkyle comprenant de 1 à 12 atomes de carbone, et de préférence représentant un groupe méthyle, éthyle, propyle ou isopropyle.

Selon une forme de réalisation particulièrement préférée de l'invention, n = 2 et R² est un groupe diester d'acide phosphonique de formule -PO(OEt)₂ (R est donc un groupe éthyle), avec de préférence R' représentant un groupe éthyle.

Selon une forme de réalisation particulièrement préférée de l'invention, la composition comprend de 10 à 40% en masse environ, de préférence de 10 à 30% en masse environ du précurseur de ladite charge ignifugeante, et de préférence encore de 1 à 9% en masse environ du précurseur de ladite charge ignifugeante, par rapport à la masse totale de la composition.

Le précurseur est généralement liquide à température ambiante (i.e. 20-25°C environ).

Le polymère organique thermoplastique de la composition peut être choisi parmi les homo- et les copolymères d'oléfines, en particulier réticulables ou non réticulables.

Parmi les homo- et les copolymères d'oléfines, on peut citer les homo- et les copolymères d'éthylène ou les homo- et les copolymères de propylène.

À titre d'exemples d'homo- et copolymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère organique thermoplastique est de préférence à l'état fondu dans la composition de l'invention. En d'autres termes, cela signifie que la composition est à une température suffisante pour permettre l'état fondu du polymère organique thermoplastique. La température suffisante peut par exemple être une température supérieure ou égale à la température de fusion du polymère organique thermoplastique lorsque celui-ci est sous forme semi-cristalline ou une température supérieure ou égale à sa température de transition vitreuse lorsque celui-ci est sous forme amorphe.

Le précurseur de la charge ignifugeante est généralement liquide à la température suffisante telle que définie ci-dessus.

Le polymère organique thermoplastique peut comprendre une ou plusieurs fonctions réactives F¹ capables de réagir avec la charge ignifugeante et/ou le précurseur de la charge ignifugeante, en particulier de manière à ce que la matrice polymère organique soit liée de façon covalente avec la charge ignifugeante.

Parmi ces fonctions réactives F¹, on peut citer les fonctions ester, anhydride (anhydride maléique), alcool ou un de leurs mélanges.

Par conséquent, lorsque le polymère organique comprend des fonctions réactives F¹, la couche électriquement isolante obtenue à partir de ladite composition peut constituer une couche composite ou nanocomposite, et lorsque le polymère organique ne comprend pas de fonctions réactives F¹, la couche électriquement isolante obtenue à partir de ladite composition constitue une couche hydride.

Le polymère organique thermoplastique peut comprendre une ou plusieurs fonctions réactives F² permettant sa réticulation.

Parmi ces fonctions réactives F², on peut citer les fonctions trialcoxysilane, ester, anhydride (anhydride maléique), alcool, alcène ou un de leurs mélanges.

Selon une forme de réalisation particulièrement préférée de l'invention, la composition comprend de 50 à 99% en masse environ, de préférence de 70 à 99% en masse environ du polymère organique thermoplastique, et de préférence encore de 90 à 99% en masse environ du polymère organique thermoplastique, par rapport à la masse totale de la composition.

La composition peut comprendre en outre un tétraalcoxysilane, en particulier répondant à la formule suivante :

(R"O)₄Si

dans laquelle R" est un groupe alkyle comprenant de 1 à 12 atomes de carbone, et de préférence représentant un groupe méthyle, éthyle, propyle ou isopropyle.

Lorsqu'il est utilisé, le tétraalcoxysilane de silicium représente de préférence de 5 à 50% en masse environ, et de préférence encore de 10 à 30% en masse environ, par rapport à la masse totale de la composition.

La composition peut comprendre en outre un catalyseur de condensation tel que de l'eau. Ce catalyseur catalyse donc la transformation chimique du précurseur en charge ignifugeante.

Lorsqu'il est utilisé, le catalyseur représente de préférence de 0,1 à 3% en masse environ, et de préférence encore de 0,1 à 1% en masse environ, par rapport à la masse totale de la composition.

La composition peut comprendre en outre un agent de réticulation.

L'agent de réticulation peut être choisi parmi les peroxydes, notamment les peroxydes organiques.

Lorsqu'il est utilisé, l'agent de réticulation représente de préférence de 0,6 à 2% en masse environ, et de préférence de 0,8 à 1,5% en masse environ, par rapport à la masse totale de la composition.

La composition peut comprendre en outre au moins une charge inerte (i.e. non combustible), notamment choisie parmi le talc, les fibres de cellulose, la silice et un de leurs mélanges.

Lorsqu'elle est utilisée, la charge inerte représente de préférence de 1 à 10% en masse environ, de préférence de 2,5 à 10% en masse environ, et de préférence encore de 5 à 10% en masse environ, par rapport à la masse totale de la composition.

La composition peut comprendre en outre au moins un agent de mise en œuvre, notamment choisie parmi les carboxylates de métal tels que le stéarate de calcium.

Lorsqu'il est utilisé, l'agent de mise en œuvre représente de préférence de 1 à 10% en masse environ, et de préférence encore de 1 à 5% en masse environ, par rapport à la masse totale de la composition.

La composition peut comprendre en outre au plus 20% en masse environ, et de préférence au plus 10% en masse environ, de charge(s) ignifugeante(s) différente(s) de celle obtenue à partir du précurseur comprenant du silicium et du phosphore tel que défini dans l'invention, par rapport à la masse totale de la composition.

De telles charges ignifugeantes peuvent être choisies parmi les hydroxydes métalliques, les oxydes métalliques et un de leurs mélanges.

La couche électriquement isolante du câble de l'invention est une couche organique/inorganique hybride ou (nano)composite homogène. En particulier, cette homogénéité est obtenue grâce à une bonne dispersion du précurseur de la charge ignifugeante au sein du polymère organique thermoplastique de la composition.

La couche électriquement isolante est de préférence résistante au feu.

Avantageusement, la couche électriquement isolante de l'invention satisfait au moins à la norme de résistance au feu IEC 60092 ou ISO6722.

La couche électriquement isolante présente de préférence une épaisseur sensiblement constante et constitue notamment une enveloppe de protection continue.

La couche électriquement isolante présente de préférence une épaisseur allant de 300 µm à 5 mm environ, et de préférence encore allant de 0,6 mm à 2mm environ.

La couche électriquement isolante de l'invention est de préférence non poreuse.

La couche électriquement isolante de l'invention est de préférence une couche extrudée, notamment par des procédés bien connus de l'homme du métier.

Selon une forme de réalisation particulièrement préférée, la couche électriquement isolante de l'invention est de préférence une couche extrudée par extrusion réactive. En d'autres termes, le précurseur de la charge ignifugeante présent dans la composition telle que définie dans l'invention est transformé *in situ* en charge ignifugeante dans une extrudeuse lors de l'extrusion de la composition autour de l'élément conducteur allongé, pour former la couche électriquement isolante de l'invention.

Par ailleurs, l'extrusion réactive peut également permettre simultanément de lier de façon covalente la matrice polymère organique avec la charge ignifugeante ou le précurseur de ladite charge, *via* les fonctions réactives F¹ du polymère organique thermoplastique présent dans la composition.

L'extrusion réactive peut également permettre simultanément de réticuler le polymère organique thermoplastique présent dans la composition *via* les fonctions réactives F² dudit polymère organique thermoplastique.

Dans la présente invention, on entend par « couche électriquement isolante » une couche dont la conductivité électrique peut être d'au plus 1.10⁻⁹ S/m, et de préférence d'au plus 1.10⁻¹⁰ S/m (siemens par mètre) (à 25°C).

Le câble comprend au moins un élément conducteur allongé et une couche électriquement isolante telle que définie dans l'invention entourant ledit élément conducteur allongé.

La couche électriquement isolante est de préférence une couche externe dudit câble.

La couche électriquement isolante n'est de préférence pas en contact physique direct avec l'élément conducteur allongé.

Le câble peut comprendre une pluralité d'éléments conducteurs allongés. La couche électriquement isolante peut alors entourer la pluralité d'éléments conducteurs allongés du câble.

La couche électriquement isolante de l'invention n'est de préférence pas en contact physique direct avec les éléments conducteurs allongés.

Le câble peut comprendre une pluralité de couches électriquement isolantes telles que définies dans l'invention.

Selon une première variante de ce mode de réalisation, le câble comprend un ou plusieurs éléments conducteurs allongés et la pluralité de couches électriquement isolantes entoure l'élément conducteur allongé ou la pluralité d'éléments conducteurs allongés.

À titre d'exemple, le câble peut comprendre deux couches électriquement isolante telles que définies dans l'invention adjacentes.

Selon une deuxième variante de ce mode de réalisation, le câble comprend une pluralité d'éléments conducteurs allongés et chacune des couches électriquement isolantes entoure individuellement chacun des éléments conducteurs allongés pour former des éléments conducteurs allongés isolés.

Selon cette deuxième variante, chacune des couches électriquement isolantes de l'invention n'est de préférence pas en contact physique direct avec chacun des éléments conducteurs allongés qu'elle entoure.

Le ou les éléments conducteurs allongés du câble de l'invention sont de préférence des éléments électriquement conducteurs allongés. Le câble est par conséquent un câble électrique, en particulier un câble électrique moyenne tension ou basse tension.

Le câble de l'invention peut comprendre en outre une gaine externe de protection, notamment électriquement isolante, entourant la ou les couche(s) électriquement isolante(s).

L'invention a pour deuxième objet un procédé de fabrication d'un câble d'énergie et/ou de télécommunication tel que défini selon le premier objet de l'invention, caractérisé en ce qu'il comprend au moins les étapes suivantes :
1) la préparation d'une composition telle que définie dans le premier objet de l'invention, le polymère organique thermoplastique étant à l'état fondu,
2) le chauffage de la composition de l'étape 1), afin de maintenir le polymère organique thermoplastique à l'état fondu, et
3) l'application de la composition chauffée de l'étape 2) autour d'au moins un élément conducteur allongé dudit câble d'énergie et/ou de télécommunication,
afin de former une couche électriquement isolante telle que définie dans l'invention.

Le procédé conforme à l'invention est rapide, simple et avantageux d'un point de vue économique. Il permet de fabriquer en peu d'étapes un câble présentant une excellente résistance au feu, tout en garantissant de bonnes propriétés mécaniques, notamment en termes de flexibilité.

L'étape 1) peut être effectuée selon les sous-étapes suivantes :
1-i) le chauffage d'au moins un polymère organique thermoplastique tel que défini dans le premier objet de l'invention à une température suffisante afin qu'il soit à l'état fondu,
1-ii) l'ajout d'au moins un précurseur de ladite charge ignifugeante comprenant du silicium et du phosphore tel que défini dans le premier objet de l'invention audit polymère organique thermoplastique chauffé de la sous-étape 1-i), et
1-iii) éventuellement l'ajout d'un tétraalcoxysilane et/ou d'un agent de réticulation et/ou d'un catalyseur et/ou d'une charge inerte et/ou d'une charge ignifugeante différente de celle obtenue à partir du précurseur comprenant du silicium et du phosphore tel que défini dans l'invention, s'ils existent.

La sous-étape 1-i) peut être effectuée à une température suffisante allant de 60°C à 200°C environ.

La température suffisante dépend de la nature du polymère organique thermoplastique. La température suffisante est généralement supérieure ou égale à la température de fusion du polymère organique thermoplastique lorsque celui-ci est sous forme semi-cristalline ou supérieure ou égale à la température de transition vitreuse du polymère organique thermoplastique lorsque celui-ci est sous forme amorphe.

Au cours de l'étape 2), le polymère organique thermoplastique est maintenu à l'état fondu. Par ailleurs, la transformation chimique du précurseur comprenant du silicium et du phosphore en charge ignifugeante par un procédé sol-gel (hydrolyse-polycondensation) a lieu.

L'étape 2) est généralement effectuée à la température suffisante telle que définie ci-dessus.

Les étapes 1) et 2) peuvent être effectuées simultanément.

Selon une forme de réalisation particulièrement préférée de l'invention, les étapes 1) et 2) ou les sous-étapes 1-i), 1-ii), 1-iii) et l'étape 2) sont effectuées à l'aide d'un mélangeur longitudinal à vis.

Le mélangeur longitudinal à vis de l'invention est un « réacteur continu » permettant de réaliser un mélange en continu tout au long de la vis, dans lequel au moins une transformation chimique est volontairement générée de manière contrôlée, *via* notamment le contrôle de la température et/ou de la vitesse de cisaillement induite par la ou les profils de vis. Dans la présente invention, la transformation chimique consiste notamment en la transformation chimique du précurseur comprenant du silicium et du phosphore en charge ignifugeante par un procédé sol-gel (hydrolyse-polycondensation).

Dans un mode de réalisation particulièrement préféré, le mélangeur longitudinal à vis est une extrudeuse. On parle alors plus particulièrement d'extrusion réactive. L'extrusion réactive permet donc de réaliser un mélange en continu à l'intérieur d'une extrudeuse dans laquelle au moins une transformation chimique est volontairement générée de manière contrôlée, en plus des mécanismes thermomécaniques bien connus.

L'extrudeuse de l'invention peut comprendre une ou plusieurs vis à l'intérieur de ladite extrudeuse.

La ou les vis s'étendent le long de l'axe longitudinal de l'extrudeuse, et sont entrainées en rotation autour de leur axe longitudinal.

Lorsque l'extrudeuse comprend une unique vis, on parle d'extrudeuse monovis ; et lorsque l'extrudeuse comprend deux vis, on parle d'extrudeuse bis-vis. Une extrudeuse monovis est privilégiée.

L'extrudeuse peut comprendre une ou plusieurs zones d'introduction de la matière le long de son axe longitudinal.

L'extrudeuse peut en outre comprendre une ou plusieurs zones de chauffe, permettant de contrôler la température dans une ou plusieurs des zones de chauffe du mélangeur.

La vitesse de cisaillement au sein de l'extrudeuse peut être facilement contrôlée. À titre d'exemple, elle va de 1 s⁻¹ à 5000 s⁻¹.

La vitesse de vis de l'extrudeuse peut également être facilement contrôlée. À titre d'exemple, elle peut aller de 5 tours par minutes à 50 tours par minutes.

Lorsque les étapes 1) et 2) ou les sous-étapes 1-i), 1-ii), 1-iii) et l'étape 2) sont effectuées à l'aide d'une extrudeuse, elles comprennent de préférence les sous-étapes suivantes :
- l'introduction du polymère organique thermoplastique, notamment sous la forme de pastilles, par l'intermédiaire d'une trémie de ladite extrudeuse, dans une zone d'alimentation (de manière à ce que le polymère organique thermoplastique fonde) (sous-étape 1-i),
- l'introduction du précurseur de la charge ignifugeante par l'intermédiaire d'un fourreau de ladite extrudeuse, dans une première zone de transport en aval de la zone d'alimentation, pour former ladite composition [sous-étape 1-ii), et sous-étape 1-iii) si l'un quelconque du tétraalcoxysilane, de l'agent de réticulation, du catalyseur, de la charge inerte ou de la charge ignifugeante différente de celle obtenue à partir du précurseur comprenant du silicium et du phosphore tel que défini dans l'invention existe], et
- la traversée de la composition tout au long de l'extrudeuse jusqu'à la tête de l'extrudeuse afin de transformer le précurseur en charge ignifugeante [étape 2)].

La zone d'alimentation est de préférence à la température suffisante telle que définie dans l'invention de manière à ce que le polymère organique thermoplastique ainsi introduit dans l'extrudeuse fonde.

Après l'introduction du précurseur, la composition ainsi formée est entraînée par le pas de vis le long de l"extrudeuse jusqu'à la tête de l'extrudeuse selon l'étape 2).

Lorsque le polymère organique thermoplastique comprend des fonctions réactives F¹ et/ou F² telles que définies dans l'invention, il est de préférence introduit directement avec lesdites fonctions réactives par l'intermédiaire de la trémie.

L'étape 3) peut être effectuée par extrusion, notamment à l'aide d'une extrudeuse comprenant une filière en sortie d'extrudeuse.

Lorsqu'une extrudeuse est utilisée dans les étapes 1) et 2), l'étape 3) peut être avantageusement réalisée en continu, dans la même extrudeuse.

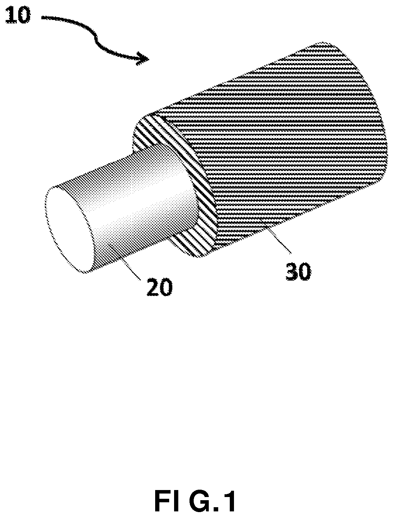

L'invention sera mieux comprise, et d'autres buts, détails, caractéristiques et avantages de celle-ci apparaîtront plus clairement au cours de la description suivante de modes de réalisation particuliers de l'invention, donnés uniquement à titre illustratif et non limitatif, en référence à la figure 1 annexée.

La figure 1 représente une vue schématique de section d'un câble électrique selon un mode de réalisation de la présente invention.

Pour des raisons de clarté, seuls les éléments essentiels pour la compréhension de l'invention ont été représentés de manière schématique sur ces figures, et ceci sans respect de l'échelle.

Le câble électrique 10, illustré sur la figure 1, correspond à un câble électrique à moyenne tension résistant au feu. Ce câble électrique 10 comprend : un élément électriquement conducteur central allongé 20 et une couche électriquement isolante 30 telle que définie dans l'invention.

La présente invention est illustrée par l'exemple ci-après, auquel elle n'est cependant pas limitée.

### EXEMPLE

Les matières premières utilisées dans l'exemple, sont listées ci-après :
- Orthosilicate de tétraéthyle (TEOS) (98%), Sigma-Aldrich,
- Azobisisobutyronitrile (AIBN, 98%), Sigma-Aldrich,
- 9,10-dihydro-9-oxa-10-phosphaphénanthrène (DOPO), ABCR Gelest,
- Tétrahydrofurane (THF), Carlo Erba Reagents,
- Polypropylène HP 500N, LyondellBasell,
- Talc, Imerys, et
- Stéarate de Calcium (Ceasit Av Veg), Baerlocher.

Tous les matériaux ont été utilisés tels que reçus.

### 1. Préparation du précurseur de la charge ignifugeante

5 g de DOPO ont été placés dans un ballon à deux cols sous agitation, sous atmosphère d'azote, à 80°C. Le DOPO a ainsi été séché pendant plusieurs minutes, puis 25 ml de THF ont été ajoutés. Une fois le DOPO solubilisé dans le THF, 6,6 g de TEOS ont été ajoutés. La solution résultante a été agitée pendant 15 min. Enfin, 0,19 g d'AIBN ont été ajoutés à la solution. La température a été maintenue à 80°C pendant 10 heures. Le précurseur liquide obtenu a été purifié par évaporation rotative à 160°C, afin d'éliminer tout excès de solvant ou de TEOS.

### 2. Préparation du matériau constituant la couche électriquement isolante

La préparation de la couche a été réalisée par voie fondue par extrusion réactive, à l'aide d'une extrudeuse double vis co-rotative.

Pour ce faire, un mélange comprenait suivant 93% en masse de polypropylène, 5% en masse de talc, et 2% en masse de stéarate de calcium (2%), par rapport à la masse totale du mélange, a été introduit à travers la trémie de l'extrudeuse, la température d'extrusion était de 200°C.

Puis, le précurseur liquide obtenu à l'étape précédente a été introduit dans l'extrudeuse, notamment à travers un point d'injection liquide au niveau du fourreau, en utilisant une pompe hydrostatique. Le précurseur représentait environ 30% en masse, par rapport à la masse totale dudit précurseur liquide et dudit mélange. Un profil de vis adapté a été utilisé pour faciliter l'injection du précurseur dans l'extrudeuse.

À la sortie de l'extrudeuse, le matériau obtenu a été refroidi dans un bain de refroidissement à eau, séché et granulé.

Le matériau a ensuite été séché pendant 4h à 70°C, et des échantillons dudit matériau sous forme de plaques de 1 mm et 1,6 mm ont ensuite été pressés.

Le matériau obtenu a une densité de 1,05 g/cm³, un module de traction de 1450 MPa, une résistance à la traction de 24 MPa, et une élongation à la rupture de 35% mesurés selon la norme IEC60811-1-1.

La température de fonctionnement du matériau est de 105°C.

Par ailleurs, le matériau satisfait à la norme de résistance à la flamme UL 94 V1 (avec une épaisseur de 1,6 mm).

## Revendications

1. Câble d'énergie et/ou de télécommunication comprenant au moins un élément conducteur allongé et au moins une couche électriquement isolante entourant ledit élément conducteur allongé, **caractérisé en ce que** :
- la couche électriquement isolante comprend une matrice polymère organique dans laquelle est dispersée une charge ignifugeante comprenant un réseau macromoléculaire d'oxyde de silicium fonctionnalisé par des fonctions phosphonate, et
- la couche électriquement isolante est obtenue à partir d'une composition comprenant au moins un polymère organique thermoplastique et au moins un précurseur de ladite charge ignifugeante comprenant du silicium et du phosphore.

2. Câble selon la revendication 1, **caractérisé en ce que** les fonctions phosphonate sont des fonctions monoester d'acide phosphonique [-PO(OR)(OH)], des fonctions diester d'acide phosphonique [-PO(OR)₂], des fonctions acide phosphonique [-PO(OH)₂] ou un de leurs mélanges, R représentant un groupe alkyle comprenant de 1 à 12 atomes de carbone.

3. Câble selon la revendication 1 ou 2, **caractérisé en ce que** le réseau macromoléculaire d'oxyde de silicium de la charge ignifugeante est fonctionnalisé par des fonctions phosphonate *via* un bras de liaison L, ledit bras de liaison L étant une chaîne alkylène linéaire ou ramifiée ayant de 1 à 12 atomes de carbone.

4. Câble selon l'une quelconque des revendications précédentes, **caractérisé en ce que** la charge ignifugeante est un polymère d'oxyde de silicium portant des groupements organiques R¹ répondant à la formule -(CH₂)ₙ-R² dans laquelle 0 ≤ n ≤ 5, et R² représente :
- un groupe monoester d'acide phosphonique [-PO(OR)(OH)],
- un groupe diester d'acide phosphonique [-PO(OR)₂],
- un groupe acide phosphonique [-PO(OH)₂], ou
- un de leurs mélanges,
R étant tel que défini dans la revendication 2.

5. Câble selon l'une quelconque des revendications précédentes, **caractérisé en ce que** la charge ignifugeante est sous la forme de particules.

6. Câble selon l'une quelconque des revendications précédentes, **caractérisé en ce que** le précurseur de ladite charge ignifugeante répond à la formule suivante :
(R'O)₃Si-(CH₂)ₙ-R²
dans laquelle n et R² sont tels que définis dans la revendication 4, et R' est un groupe alkyle comprenant de 1 à 12 atomes de carbone.

7. Câble selon l'une quelconque des revendications précédentes, **caractérisé en ce que** la composition comprend de 10 à 30% en masse du précurseur de ladite charge ignifugeante, par rapport à la masse totale de la composition.

8. Câble selon l'une quelconque des revendications précédentes, **caractérisé en ce que** le polymère organique thermoplastique de la composition est choisi parmi les homo- et les copolymères d'oléfines.

9. Câble selon l'une quelconque des revendications précédentes, **caractérisé en ce que** le polymère organique thermoplastique comprend une ou plusieurs fonctions réactives F¹ capables de réagir avec la charge ignifugeante et/ou le précurseur de la charge ignifugeante.

10. Câble selon l'une quelconque des revendications précédentes, **caractérisé en ce que** la composition comprend de 70 à 99% en masse du polymère organique thermoplastique, par rapport à la masse totale de la composition.

11. Câble selon l'une quelconque des revendications précédentes, **caractérisé en ce que** la composition comprend en outre un tétraalcoxysilane répondant à la formule suivante :
(R"O)₄Si
dans laquelle R" est un groupe alkyle comprenant de 1 à 12 atomes de carbone.

12. Câble selon l'une quelconque des revendications précédentes, **caractérisé en ce que** la composition comprend en outre un catalyseur de condensation.

13. Câble selon l'une quelconque des revendications précédentes, **caractérisé en ce que** la composition comprend en outre un agent de réticulation.

14. Procédé de fabrication d'un câble d'énergie et/ou de télécommunication tel que défini à l'une quelconque des revendications précédentes, **caractérisé en ce qu'**il comprend au moins les étapes suivantes :
1) la préparation d'une composition telle que définie à l'une quelconque des revendications 1 et 6 à 13, le polymère organique thermoplastique étant à l'état fondu,
2) le chauffage de la composition de l'étape 1) à une température suffisante, afin de maintenir le polymère organique thermoplastique à l'état fondu, et
3) l'application de la composition chauffée de l'étape 2) autour d'au moins un élément conducteur allongé dudit câble d'énergie et/ou de télécommunication, afin de former ladite couche électriquement isolante.

15. Procédé selon la revendication 14, **caractérisé en ce que** l'étape 1) est effectuée selon les sous-étapes suivantes :
1-i) le chauffage dudit polymère organique thermoplastique à une température suffisante allant de 60°C à 200°C, afin qu'il soit à l'état fondu,
1-ii) l'ajout dudit précurseur de ladite charge ignifugeante comprenant du silicium et du phosphore audit polymère organique thermoplastique chauffé de la sous-étape 1-i), et
1-iii) éventuellement l'ajout d'un tétraalcoxysilane et/ou d'un agent de réticulation et/ou d'un catalyseur et/ou d'une charge inerte et/ou d'une charge ignifugeante différente de celle obtenue à partir du précurseur comprenant du silicium et du phosphore, s'ils existent.

16. Procédé selon la revendication 14 ou 15, **caractérisé en ce que** les étapes 1) et 2) ou les sous-étapes 1-i), 1-ii), 1-iii) et l'étape 2) sont effectuées à l'aide d'une extrudeuse.

17. Procédé selon la revendication 16, **caractérisé en ce que** les étapes 1) et 2) ou les sous-étapes 1-i), 1-ii), 1-iii) et l'étape 2) comprennent les sous-étapes suivantes :
- l'introduction du polymère organique thermoplastique sous la forme de pastilles, par l'intermédiaire d'une trémie de ladite extrudeuse, dans une zone d'alimentation,
- l'introduction du précurseur de la charge ignifugeante par l'intermédiaire d'un fourreau de ladite extrudeuse, dans une première zone de transport en aval de la zone d'alimentation, pour former ladite composition, et
- la traversée de la composition tout au long de l'extrudeuse jusqu'à la tête de l'extrudeuse afin de transformer le précurseur en charge ignifugeante.

18. Procédé selon l'une quelconque des revendications 16 ou 17, **caractérisé en ce que** l'étape 3) est effectuée par extrusion en continu, dans la même extrudeuse que celle des étapes 1) et 2) ou des sous-étapes 1-i), 1-ii), 1-iii) et de l'étape 2).

## Patentansprüche

1. Energie- und/oder Telekommunikationskabel, umfassend mindestens ein längliches Leiterelement und mindestens eine elektrisch isolierende Schicht, die das längliche Leiterelement umgibt, **dadurch gekennzeichnet, dass**:
- die elektrisch isolierende Schicht eine organische Polymermatrix umfasst, in der ein flammhemmender Füllstoff verteilt ist, umfassend ein makromolekulares, durch Phosphonatfunktionen funktionalisiertes Siliziumoxidnetz, und
- die elektrisch isolierende Schicht aus einer Zusammensetzung erhalten ist, die mindestens ein thermoplastisches organisches Polymer und mindestens einen Vorläufer des flammhemmenden Füllstoffs umfasst, der Silizium und Phosphor umfasst.

2. Kabel nach Anspruch 1, **dadurch gekennzeichnet, dass** die Phosphonatfunktionen Phosphonsäuremonoesterfunktionen [-PO(OR)(OH)], Phosphonsäurediesterfunktionen [-PO(OR)₂], Phosphonsäurefunktionen [-PO(OH)₂] oder eins von deren Gemischen sind, wobei R eine Alkylgruppe repräsentiert, die 1 bis 12 Kohlenstoffatome umfasst.

3. Kabel nach Anspruch 1 oder 2, **dadurch gekennzeichnet, dass** das makromolekulare Siliziumoxidnetz des flammhemmenden Füllstoffs über einen Verbindungsarm L durch Phosphonatfunktionen funktionalisiert ist, wobei der Verbindungsarm L eine lineare oder verzweigte Alkylenkette mit 1 bis 12 Kohlenstoffatomen ist.

4. Kabel nach einem der vorangehenden Ansprüche, **dadurch gekennzeichnet, dass** der flammhemmender Füllstoff ein Siliziumoxidpolymer ist, das organische Gruppen R¹ trägt, die der Formel -(CH₂)ₙ-R² entsprechen, wobei 0 ≤ n ≤ 5 ist, und R² darstellt:
- eine Phosphonsäuremonoestergruppe [-PO(OR)(OH)],
- eine Phosphonsäurediestergruppe [-PO(OR)₂],
- eine Phosphonsäuregruppe [-PO(OH)₂], oder
- eins von deren Gemischen, wobei R wie in Anspruch 2 definiert ist.

5. Kabel nach einem der vorangehenden Ansprüche, **dadurch gekennzeichnet, dass** der flammhemmende Füllstoff in Partikelform vorliegt.

6. Kabel nach einem der vorangehenden Ansprüche, **dadurch gekennzeichnet, dass** der Vorläufer des flammhemmenden Füllstoffs der folgenden Formel entspricht:
(R'O)₃Si-(CH₂)ₙ-R²
wobei n und R² wie in Anspruch 4 definiert sind und R' eine Alkylgruppe ist, die 1 bis 12 Kohlenstoffatome umfasst.

7. Kabel nach einem der vorangehenden Ansprüche, **dadurch gekennzeichnet, dass** die Zusammensetzung 10 bis 30 Ma% des Vorläufers des flammhemmenden Füllstoffs in Bezug auf die Gesamtmasse der Zusammensetzung umfasst.

8. Kabel nach einem der vorangehenden Ansprüche, **dadurch gekennzeichnet, dass** das thermoplastische organische Polymer der Zusammensetzung aus den Olefin-Homo- und Copolymeren ausgewählt ist.

9. Kabel nach einem der vorangehenden Ansprüche, **dadurch gekennzeichnet, dass** das thermoplastische organische Polymer eine oder mehrere reaktive Funktionen F¹ umfasst, die imstande sind, mit dem flammhemmenden Füllstoff und/oder dem Vorläufer des flammhemmenden Füllstoffs zu reagieren.

10. Kabel nach einem der vorangehenden Ansprüche, **dadurch gekennzeichnet, dass** die Zusammensetzung 70 bis 99 Ma% des thermoplastischen organischen Polymers in Bezug auf die Gesamtmasse der Zusammensetzung umfasst.

11. Kabel nach einem der vorangehenden Ansprüche, **dadurch gekennzeichnet, dass** die Zusammensetzung ferner ein Tetraalcoxysilan umfasst, das der folgenden Formel entspricht:
(R"O)₄Si
wobei R" eine Alkylgruppe ist, die 1 bis 12 Kohlenstoffatome umfasst.

12. Kabel nach einem der vorangehenden Ansprüche, **dadurch gekennzeichnet, dass** die Zusammensetzung ferner einen Kondensationskatalysator umfasst.

13. Kabel nach einem der vorangehenden Ansprüche, **dadurch gekennzeichnet, dass** die Zusammensetzung ferner ein Vernetzungsmittel umfasst.

14. Verfahren zur Herstellung eines Energie- und/oder Telekommunikationskabels wie in einem der vorangehenden Ansprüche definiert, **dadurch gekennzeichnet, dass** es mindestens die folgenden Schritte umfasst:
1) das Herstellen einer Zusammensetzung wie in einem der Ansprüche 1 und 6 bis 13 definiert, wobei das thermoplastische organische Polymer in geschmolzenem Zustand ist,
2) das Erwärmen der Zusammensetzung von Schritt 1) auf eine Temperatur, die ausreicht, um das thermoplastische organische Polymer in geschmolzenem Zustand zu halten, und
3) das Auftragen der erwärmten Zusammensetzung von Schritt 2) um mindestens ein längliches Leiterelement des Energie- und/oder Telekommunikationskabels, um die elektrisch isolierende Schicht zu bilden.

15. Verfahren nach Anspruch 14, **dadurch gekennzeichnet, dass** Schritt 1) gemäß den folgenden Unterschritten durchgeführt wird:
1-i) das Erwärmen des thermoplastischen organischen Polymers auf eine Temperatur von 60°C bis 200°C, die ausreicht, damit es in geschmolzenem Zustand ist,
1-ii) das Hinzufügen des Vorläufers des flammhemmenden Füllstoffs, der Silizium und Phosphor umfasst, zu dem erwärmten thermoplastischen organischen Polymer von Unterschritt 1-i), und
1-iii) eventuell das Hinzufügen eines Tetraalcoxysilans und/oder eines Vernetzungsmittels und/oder eines Katalysators und/oder eines inerten Füllstoffs und/oder eines flammhemmenden Füllstoffs, der von dem unterschiedlich ist, der ab dem Vorläufer erhalten wurde, der Silizium und Phosphor umfasst, sofern vorhanden.

16. Verfahren nach Anspruch 14 oder 15, **dadurch gekennzeichnet, dass** die Schritte 1) und 2) oder die Unterschritte 1-i), 1-ii), 1-iii) und der Schritt 2) mit Hilfe eines Extruders durchgeführt werden.

17. Verfahren nach Anspruch 16, **dadurch gekennzeichnet, dass** die Schritte 1) und 2) oder die Unterschritte 1-i), 1-ii), 1-iii) und der Schritt 2) die folgenden Unterschritte umfassen:
- das Einleiten des thermoplastischen organischen Polymers in Form von Pastillen über einen Trichter des Extruders in einen Versorgungsbereich,
- das Einleiten des Vorläufers des flammhemmenden Füllstoffs über eine Hülse des Extruders in einen dem Versorgungsbereich nachgelagerten ersten Transportbereich, um die Zusammensetzung zu bilden, und
- das Durchleiten der Zusammensetzung entlang des Extruders bis zum Extruderkopf, um den Vorläufer in flammhemmenden Füllstoff umzuwandeln.

18. Verfahren nach einem der Ansprüche 16 oder 17, **dadurch gekennzeichnet, dass** der Schritt 3) durch kontinuierliche Extrusion in demselben Extruder wie dem der Schritte 1) und 2) oder der Unterschritte 1-i), 1-ii), 1-iii) und von Schritt 2) durchgeführt wird.

## Claims

1. A power and/or telecommunications cable comprising at least one elongate conductive element and at least one electrically insulating layer surrounding said elongate conductive element, **characterized in that**:
- the electrically insulating layer comprises an organic polymer matrix in which there is dispersed a flame-retardant filler comprising a silicon oxide macromolecular network functionalized by phosphonate functions; and
- the electrically insulating layer is obtained from a composition comprising at least one thermoplastic organic polymer and at least one precursor of said flame-retardant filler comprising silicon and phosphorus.

2. The cable according to claim 1, **characterized in that** the phosphonate functions are monoester functions of phosphonic acid [-PO(OR)(OH)], diester functions of phosphonic acid [-PO(OR)₂], phosphonic acid functions [PO(OH)₂] or one of the mixtures thereof, R representing an alkyl group having 1 to 12 carbon atoms.

3. The cable according to claim 1 or 2, **characterized in that** the silicon oxide macromolecular network of the flame-retardant filler is functionalized by phosphonate functions via a linker arm, L, said linker arm L being a linear or branched alkylene chain having 1 to 12 carbon atoms.

4. The cable according to any of the preceding clams, **characterized in that** the flame-retardant filler is a silicon oxide polymer carrying organic groups R¹ meeting formula - (CH₂)ₙ-R² where = 0 ≤ n ≤ 5, and R² is:
- a monoester group of phosphonic acid [-PO(OR)(OH)];
- a diester group of phosphonic acid [-PO(OR)₂];
- a phosphonic acid group [-PO(OH)₂]; or
- one of the mixtures thereof,
R being such as defined in claim 2.

5. The cable according to any of the preceding claims, **characterized in that** the flame-retardant filler is in particle form.

6. The cable according to any of the preceding claims, **characterized in that** the precursor of said flame-retardant filler meets the following formula:
(R'O)₃Si-(CH₂)ₙ-R²
where n and R² are such as defined in claim 4, and R' is an alkyl group having 1 to 12 carbon atoms.

7. The cable according to any of the preceding claims, **characterized in that** the composition comprises from 10 to 30 weight % of the precursor of said flame-retardant filler relative to the total weight of the composition.

8. The cable according to any of the preceding claims, **characterized in that** the thermoplastic organic polymer of the composition is selected from among homo- and copolymers of olefins.

9. The cable according to any of the preceding claims, **characterized in that** the thermoplastic organic polymer comprises one or more reactive functions F¹ capable of reacting with the flame-retardant filler and/or the precursor of the flame-retardant filler.

10. The cable according to any of the preceding claims, **characterized in that** the composition comprises from 70 to 99 weight % of the thermoplastic organic polymer relative to the total weight of the composition.

11. The cable according to any of the preceding claims, **characterized in that** the composition further comprises a tetraalkoxysilane meeting the following formula:
(R"O)₄Si
where R" is an alkyl group having 1 to 12 carbon atoms.

12. The cable according to any of the preceding claims, **characterized in that** the composition further comprises a condensation catalyst.

13. The cable according to any of the preceding claims, **characterized in that** the composition further comprises a crosslinking agent.

14. A method for producing a power and/or telecommunications cable such as defined in any of the preceding claims, **characterized in that** it comprises at least the following steps:
1) preparing a composition such as defined in any of claims 1 and 6 to 13, the thermoplastic organic polymer being in the molten state;
2) heating the composition of step 1) to sufficient temperature to maintain the thermoplastic organic polymer in the molten state; and
3) applying the composition heated at step 2) around at least one elongate conductive element of said power and/or telecommunications cable,
to form said electrically insulating layer.

15. The method according to claim 14, **characterized in that** step 1) is performed with the following sub-steps:
1-i) heating said thermoplastic organic polymer to sufficient temperature ranging from 60°C to 200°C so that it is in the molten state;
1-ii) adding said precursor of said flame-retardant filler comprising silicon and phosphorus to said heated thermoplastic organic polymer of sub-step 1-i); and
1-iii) optionally adding a tetraalkoxysilane and/or a crosslinking agent and/or a catalyst and/or an inert filler and/or a flame-retardant filler differing from the one obtained from the precursor comprising silicon and phosphorus, if any.

16. The method according to claim 14 or 15, **characterized in that** steps 1) and 2) or sub-steps I-i), 1-ii), 1-iii) and step 2) are performed using an extruder.

17. The method according to claim 16, **characterized in that** steps 1) and 2) or sub-steps I-i), 1-ii), 1-iii) and step 2) comprise the following sub-steps:
- adding the thermoplastic organic polymer in pellet form, via a hopper of said extruder, to a feed zone;
- adding the precursor of the flame-retardant filler, via a barrel of said extruder, to a first conveying zone downstream of the feed zone, to form said composition; and
- passing the composition along the entire length of the extruder as far as the extrusion head to convert the precursor to flame-retardant filler.

18. The method according to any of claims 16 or 17, **characterized in that** step 3) is performed by continuous extrusion, in the same extruder as used for steps 1) and 2) or sub-steps I-i), 1-ii), 1-iii) and step 2).
